# EUROPEAN PATENT APPLICATION

(11) **EP 2 463 805 A1**
(43) Date of publication of application: **13.06.2012**
(21) Application number: 11174460.3
(22) Date of filing: 19.07.2011
(51) Int. Cl.: G06K 9/00, G06T 19/00

(54) **Mobile terminal and method for providing augmented reality using an augmented reality database**

(30) Priority: 29.11.2010 KR 20100119514
(71) Applicant: Pantech Co., Ltd., Seoul 121-792 (KR)
(72) Inventor: Lee, Hyo Jin, 121-792 Seoul (KR); Kim, Gum Ho, 121-792 Seoul (KR); Kim, Won Moo, 121-792 Seoul (KR); Kim, Ji Ye, 121-792 Seoul (KR); Bae, Jae Beom, 121-792 Seoul (KR); Lee, Jeong Seok, 121-792 Seoul (KR)
(74) Representative: Jordan, Volker Otto Wilhelm

(57) **Abstract**

A mobile terminal includes a reception unit to receive content information, an extraction unit to recognize an item of interest from the received content information and to extract detailed information, an augmented reality database to store the detailed information, and a display unit to combine the information stored in the augmented reality database with a first image and to output the combined second image in augmented reality. A method for providing an augmented reality by construction and management of a unique augmented reality database includes receiving content information, recognizing an item of interest in the received content information, extracting detailed information from metadata corresponding to the recognized item of interest, storing the detailed information in the augmented reality database, and combining the information stored in the augmented reality database with a first image into a second image, and outputting the second image in augmented reality.

## Description

### CROSS-REFERENCE TO RELATED APPLICATION

This application claims priority from and the benefit under 35 U.S.C. §119(a) of Korean Patent Application No. 10-2010-0119514, filed on November, 29, 2010 which is incorporated by reference for all purposes as if fully set forth herein.

### BACKGROUND

1. FIELD

The present disclosure relates to a mobile terminal to implement augmented reality using an augmented reality database, and a method for providing an augmented reality using the augmented reality database.

2. DISCUSSION OF THE BACKGROUND

With the rapid development of the mobile communication technology and infrastructure thereof, a mobile terminal has evolved into a medium for providing various services such as games, message transmission or reception, internet surfing, wireless information communication, electronic organizers, digital cameras, video calls, and general voice calls.

### SUMMARY

Exemplary embodiments of the present invention provide a mobile terminal to implement augmented reality using an augmented reality database. Exemplary embodiments of the present invention also provide a method for providing an augmented reality using the augmented reality database.

Additional features of the invention will be set forth in the description which follows, and in part will be apparent from the description, or may be learned by practice of the invention.

Exemplary embodiments of the present invention provide a mobile terminal including a reception unit to receive content information; an extraction unit to recognize an item of interest from the received content information and to extract detailed information from metadata corresponding to the item of interest, wherein the detailed information is a field value of an augmented reality database; the augmented reality database to store the detailed information; and a display unit to combine the information stored in the augmented reality database with a display image and to output the combined image in augmented reality.

Exemplary embodiments of the present invention provide a method for providing an augmented reality including receiving content information; recognizing an item of interest in the received content information; extracting detailed information from metadata corresponding to the recognized item of interest, wherein the detailed information is a field value of an augmented reality database; storing the detailed information in the augmented reality database; and combining the information stored in the augmented reality database with a first image into a second image, and outputting the second image in augmented reality.

Exemplary embodiments of the present invention provide a mobile terminal including a determination unit to parse the content information and to determine if the metadata corresponding to the item of interest is available in augmented reality; an extraction unit to recognize an item of interest from the received content information and to extract detailed information determined to be available by the determination unit from metadata corresponding to the recognized item of interest, wherein the detailed information includes a field value of an augmented reality database; a conversion unit to convert the extracted detailed information in an augmented reality format displayable in augmented reality; the augmented reality database to store the converted detailed information; a setting unit to edit the field value of the augmented reality database according to a user instruction or automated rules; and a display unit to combine the information stored in the augmented reality database with a display image into a combined image, and to output the combined image in augmented reality.

It is to be understood that both forgoing general descriptions and the following detailed description are exemplary and explanatory and are intended to provide further explanation of the invention as claimed. Other features and aspects will be apparent from the following detailed description, the drawings, and the claims.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a block diagram illustrating a configuration of a mobile terminal according to an exemplary embodiment of the invention.

FIG. 2 is a flowchart illustrating a process of displaying information using a mobile terminal according to an exemplary embodiment of the invention.

FIG. 3 is a diagram illustrating metadata received by a mobile terminal according to an exemplary embodiment of the invention.

FIG. 4 is a diagram illustrating information included in metadata of a mobile terminal according to an exemplary embodiment of the invention.

FIG. 5A and FIG. 5B are diagrams illustrating information displayed using a mobile terminal according to an exemplary embodiment of the invention.

### DETAILED DESCRIPTION OF THE ILLUSTRATED EMBODIMENTS

Exemplary embodiments now will be described more fully hereinafter with reference to the accompanying drawings, in which exemplary embodiments are shown. The present disclosure may, however, be embodied in many different forms and should not be construed as limited to the exemplary embodiments set forth herein. Rather, these exemplary embodiments are provided so that the present disclosure is thorough and will fully convey the scope of the invention to those skilled in the art. Throughout the drawings and the detailed description, unless otherwise described, the same drawing reference numerals are understood to refer to the same elements, features, and structures. The relative size and depiction of these elements may be exaggerated for clarity, illustration, and convenience.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

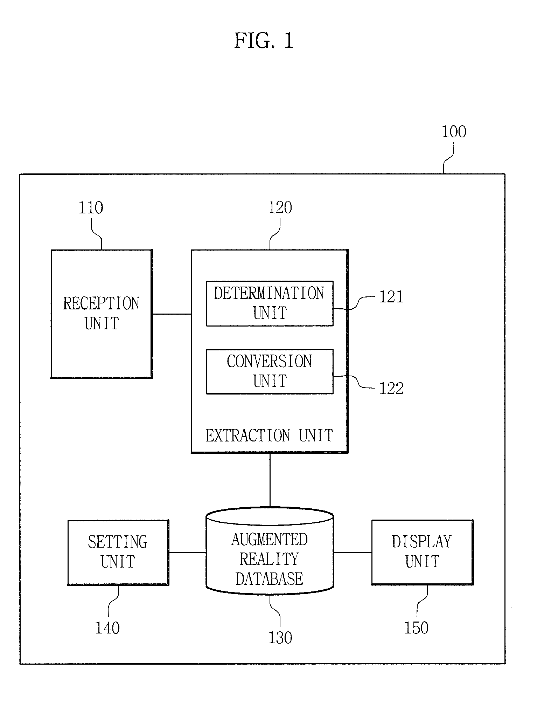

FIG. 1 is a block diagram illustrating a configuration of a mobile terminal according to an exemplary embodiment of the invention.

As shown in FIG. 1, the mobile terminal 100 includes a reception unit 110, an extraction unit 120, an augmented reality database 130, a setting unit 140 and a display unit 150.

The reception unit 110 receives content information. In an example, the content information may include broadcast content of Internet Protocol television (IPTV) or Digital Multimedia Broadcasting (DMB) played by a user through the mobile terminal, media content on a web page, and video or audio media content received in the mobile terminal.

In addition, the reception unit 110 also receives metadata synchronized with the content information. The metadata may include detailed information related to items of interest as identified in the received content information. Examples of the detailed information related to the items of interest may include a title, a category, an image, copyright information, an e-mail address, a web address, a telephone number, a production date of content, a text description, and other relevant information related to the item of interest. The format or the structure of the metadata may vary according to media subject and content. For example, in the case of Korean IPTV, metadata may be transmitted according to H.750 of the ITU-T and constructed in a XML format. In general web pages, some metadata may be included in the <meta> tag of the HTML format.

The extraction unit 120 identifies an item of interest and extracts detailed information related to the item of interest. In an example, the detailed information may be a field value of the augmented reality database extracted from the metadata corresponding to the content information received through the reception unit 110. In more detail, the extraction unit 120 may recognize an item of interest included in the obtained content information and extract detailed information related to the item of interest from the metadata corresponding to the recognized item of interest. Further, the item of interest may be automatically recognized by the invention, or manually selected by clicking or touching a region including the item of interest.

Examples of items of interest may include a person, a product, and a particular location. In an example, the number of recognized items of interest may be one or more. In addition, the extraction unit 120 may recognize an item of interest from the received content information and further extract image information as detailed information of the recognized item of interest from the metadata corresponding to the recognized item of interest. Alternatively, image information may be captured from content information displayed on a content display screen, if such information is provided. More specifically, since the metadata corresponding to the item of interest may include information of the pixel region of the image data in which the item of interest may be found, the image information of the content information may be captured using the metadata. As a result, the image information of the item of interest may be extracted from the metadata.

The extraction unit 120 may further include a determination unit 121 to parse the content information received from the reception unit 110 and to determine if the metadata of the recognized item of interest is available in augmented reality. In an example, the selected item of interest may include detailed information describing the item of interest provided by the metadata corresponding to the content information so as to be available in augmented reality. Further, the determination unit 121 may determine if the metadata is available in augmented reality based on the presence or the absence of the detailed information of the selected item of interest. Accordingly, if the extraction unit 120 is able to extract detailed information of the item of interest, the determination unit 121 may determine that the corresponding metadata is available in augmented reality. Alternatively, if the extraction unit 120 is unable to extract detailed information of the item of interest, the determination unit 121 may determine that the corresponding metadata is not available in augmented reality. For example, if an image of a hand bag is displayed on a screen, and the extraction unit 120 is able to extract information such as the name, category (e.g., shopping, product, etc.), brand name, picture and price of the hand bag from the metadata of the content, then the determination unit 121 may determine that the corresponding metadata for the hand bag is available in augmented reality.

The extraction unit 120 may further include a conversion unit 122 for converting the extracted detailed information into an augmented reality format displayable in the augmented reality. The extraction unit 120 may further include an analysis unit (not shown) for classifying the content information received from the reception unit 110 according to content information types and parsing the content information. In more detail, the analysis unit includes an information type analysis unit (not pictured) to check if the format of the received content information and the metadata is able to be processed by the mobile terminal 100. The analysis unit may further include a broadcast content analysis unit (not pictured), an internet content analysis unit (not pictured) and a media content analysis unit (not pictured).

In an example, the information type analysis unit may classify the content information and metadata according to content information types and direct the information to be processed to the broadcast content analysis unit, the internet content analysis unit, or a media content analysis unit. For example, if the received content is broadcast content, the received content may be inputted to the broadcast content analysis unit. The broadcast content analysis unit may identify a service type such as IPTV and DMB and provider, and parse and analyze the metadata received along with the content information according to the format of the metadata for each broadcast service. Alternatively, if the received content is Internet content, the content may be inputted into the Internet content analysis unit. The Internet content analysis unit may analyze a web page and parse content such as image, audio and video on the web page, text content (e.g., content name and description) including information about the content, metadata in the <meta> tag of the web page, or the like. On the other hand, if the received content is other media content, the content may be inputted into the media content analysis unit. The media content analysis unit may parse the content received.

The augmented reality database 130 stores the detailed information extracted by the extraction unit 120. In an example, the augmented reality database 130 may map the detailed information extracted by the extraction unit 120 to a corresponding field name in the augmented reality database, convert the data type and format according to the format of the field value of the augmented reality database, and store the converted data type and format. For example, if a "location" field value in the augmented reality database for an item of interest, "restaurant A," is defined to be stored in a GPS format, the augmented reality database 130 may extract address information from metadata of the item of interest "restaurant A", converts the address information into a GPS value, and stores the GPS value.

In an example, the augmented reality database 130 may include an augmented reality information table for recording a detailed information field value associated with an item of interest that is available in augmented reality. Alternatively, the augmented reality database 130 may include a category table including a category information field value, in which a category title may be a primary key. The augmented reality information table may be differently configured according to the function of the augmented reality. In an example, in the augmented reality information table, an item of interest title may be a primary key, and a category information field value may be used as a foreign key, which refers to the category table. Further, the augmented reality information table may include an image field and a detailed information field. For example, the detailed information field value associated with item of interest may include a title, a category, a location as a contact point 1, a phone number as a contact point 2, ..., an e-mail address as a contact point N, a price, a photo, a video, a sound, a first registration time as time 1, a most recent updated time as time 2, ..., a most recent opened time as time N, and a text description. In addition, the category table may include a primary key, an associated keyword field, an information gathering field according to the configuration of a user setting system, and an information gathering priority field.

The setting unit 140 may edit the field value stored in the augmented reality database 130 according to a user instruction or as provided by automated rules. In more detail, the setting unit 140 may edit a defining domain of a category field value if constructing the augmented reality database 130. For example, the category of information to be gathered in order to construct the augmented reality database may be made by a user selection, or by automated selection, such as prioritization.

The display unit 150 combines the information stored in the augmented reality database 130 with a first image and outputs the combined image in augmented reality. In an example, if an item of interest stored in the augmented reality database 130 is included in a display image photographed using a camera, the display unit 150 may recognize the item of interest, combine detailed information of the recognized item of interest with the display image, and output the combined image in augmented reality. In more detail, the display unit 150 may recognize an item of interest depending on whether a part of the display image is similar to or equal to an image of the item of interest stored in the augmented reality database 130. Alternatively, the display image may be recorded using a video recording function, or obtained through an external source, such as memory, network, email, or the like.

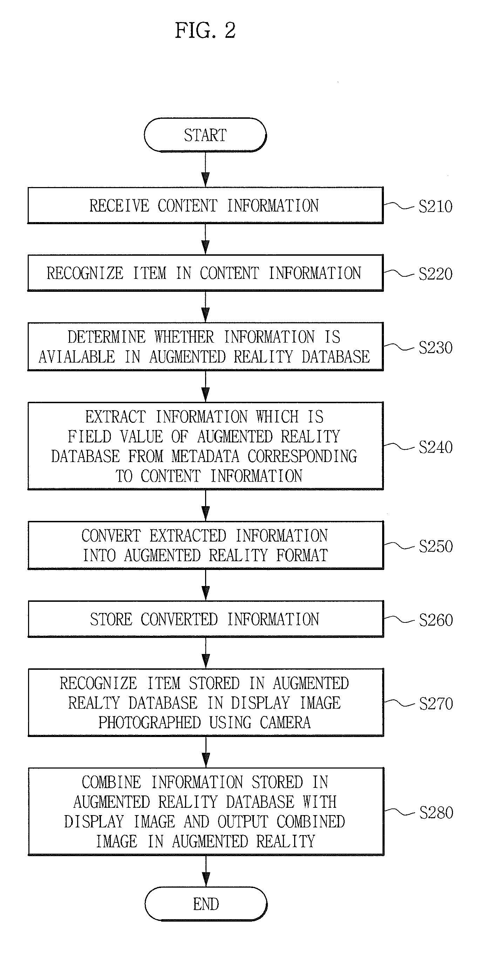

FIG. 2 is a flowchart illustrating a process of displaying information using a mobile terminal according to an exemplary embodiment of the invention.

Referring to FIG. 2, the mobile terminal receives content information (S210), recognizes an item of interest while the received content information is being displayed (S220), and determines whether the recognized item of interest is available in augmented reality (S230). If the recognized item of interest is available in augmented reality, detailed information field value of the augmented reality database may be extracted from metadata corresponding to the content information (S240). The format of the extracted information may be converted into the format of the display screen of the mobile terminal (S250) and the converted format may be stored in the augmented reality database (S260). Thereafter, if the item of interest stored in the augmented reality database is recognized from a display image photographed using a camera of the mobile terminal (S270), the information stored in the augmented reality database may be combined with the items of interest found in the display image and the combined image may be outputted in augmented reality (S280). Alternatively, although not illustrated, the provided display image in S270 may be recorded using a video recording function, or obtained through an external source, such as memory, network, email, or the like.

For example, if an item of interest appears on DMB, IPTV or web content, a user may collect information about the item of interest on a content type basis and store detailed information related to the item of interest in the augmented reality database 130 using the mobile terminal. Thereafter, if the item of interest stored in the augmented reality database 130 appears in a first image on a display unit 150, detailed information may be combined with the recognized item of interest using the information stored in the augmented reality database 130 and the combined image may be displayed. Accordingly, if a user selects a certain "mobile phone" as the item of interest while viewing DMB content, the mobile terminal may recognize that the selected item of interest is the "mobile phone" based on the selected pixel region. Then, the mobile terminal may extract an image of the "mobile phone" and detailed information thereof from the metadata corresponding to the "mobile phone," and stores the image and the detailed information in the augmented reality database 130. Thereafter, if the image of the "mobile phone" stored in the augmented reality database is recognized in an image displayed by the display unit 150, the detailed information of the mobile phone stored in the augmented reality database may be combined with the displayed image to provide a combined image to the user. In addition, if the image stored in the augmented reality database 130 is recognized in an image displayed by the display unit 150, the mobile terminal may obtain GPS information of the user location and display GPS detailed information in augmented reality.

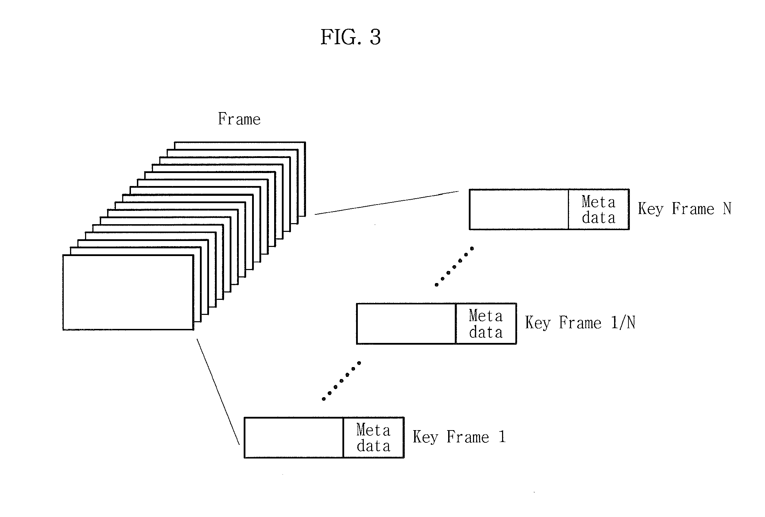

FIG. 3 is a diagram illustrating metadata received by a mobile terminal according to an exemplary embodiment of the invention.

Referring to FIG. 3, metadata synchronized with moving image content information during moving image playback may consist of key frames. During moving image compression, all of the key frames including the metadata may be stored, and a changed portion of an image between key frames may be stored and transmitted. In an example, the mobile terminal may receive the moving image content information and acquire metadata included in the key frames for its use.

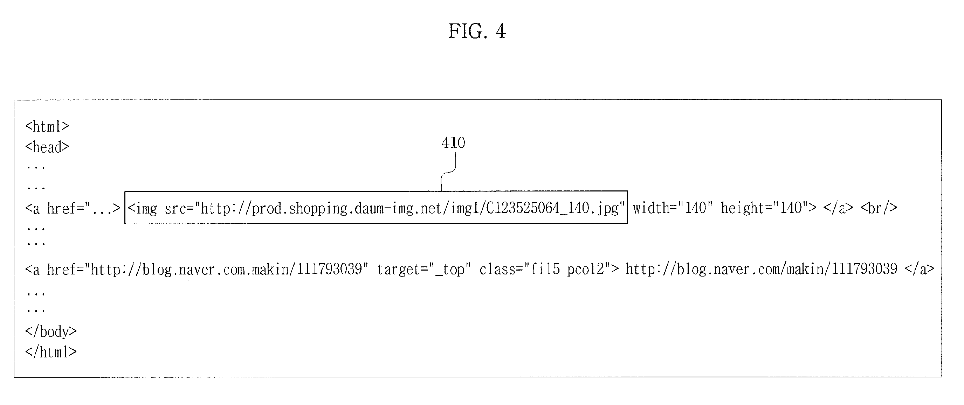

FIG. 4 is a diagram illustrating information included in metadata of a mobile terminal according to an exemplary embodiment of the invention.

Referring to FIG. 4, an image, an image size and a web address (URL) at which the image is stored may be included in an <imag src> tag 410. Further, the <imag src> tag 410 may be used in an image on a web page having an HTML format, where the <imag src> 410 tag may be parsed so as to extract image information of an item of interest selected by a user.

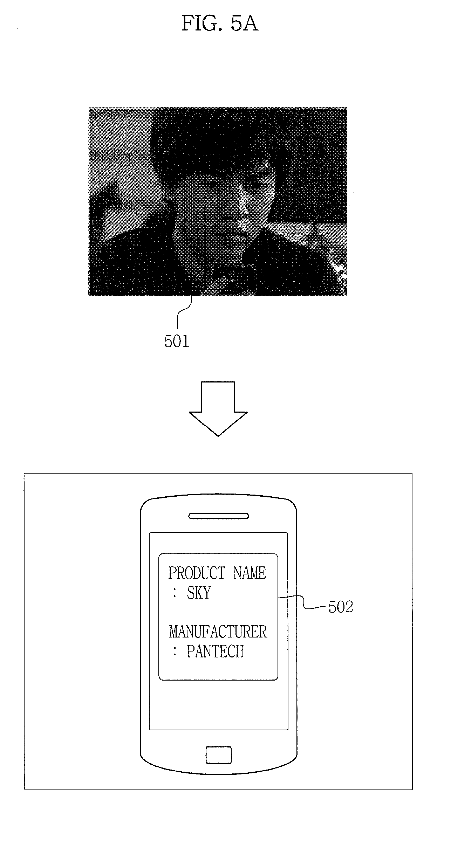

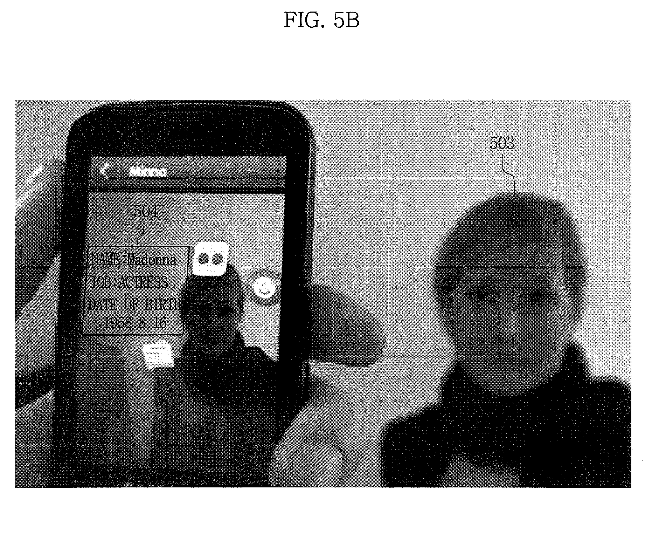

FIG. 5A and FIG. 5B are diagrams illustrating information displayed using a mobile terminal according to an exemplary embodiment of the invention.

Referring to FIG. 5A, if a user selects a mobile phone "SKY" 501 while viewing DMB content, the mobile terminal may parse content information or metadata corresponding to the mobile phone "SKY" and store detailed information such as a product name and a manufacturer of the mobile phone "SKY" in the augmented reality database. Thereafter, if a "SKY" image is recognized on an image displayed by the display unit 150, the mobile terminal may combine the detailed information of the mobile phone "SKY" stored in the augmented reality database with the photographed first image and display the combined second image.

Referring to FIG. 5B, if a user selects a person "Madonna" from content information received using the mobile terminal. In an example, the mobile terminal parses content information or metadata corresponding to the selected person "Madonna" and stores detailed information such as name, job and date of birth of the person "Madonna" in the augmented reality database. Thereafter, if the image of the person "Madonna" is recognized on an image displayed by the display unit 150, the mobile terminal may combine the detailed information of the person "Madonna" stored in the augmented reality database with the photographed first image and display the combined second image.

With the mobile terminal according to the disclosure, since an augmented reality database is constructed using favorite information of a user in the mobile terminal, an augmented reality service may be available.

It will be apparent to those skilled in the art that various modifications and variations can be made in the present invention without departing from the spirit or scope of the invention. Thus, it is intended that the present invention cover the modifications and variations of this invention provided they come within the scope of the appended claims and their equivalents.
A mobile terminal includes a reception unit to receive content information, an extraction unit to recognize an item of interest from the received content information and to extract detailed information, an augmented reality database to store the detailed information, and a display unit to combine the information stored in the augmented reality database with a first image and to output the combined second image in augmented reality. A method for providing an augmented reality by construction and management of a unique augmented reality database includes receiving content information, recognizing an item of interest in the received content information, extracting detailed information from metadata corresponding to the recognized item of interest, storing the detailed information in the augmented reality database, and combining the information stored in the augmented reality database with a first image into a second image, and outputting the second image in augmented reality.

## Claims

1. A mobile terminal, comprising:
a reception unit to receive content information;
an extraction unit to recognize an item of interest from the received content information and to extract detailed information from metadata corresponding to the item of interest, wherein the detailed information is a field value of an augmented reality database;
the augmented reality database to store the detailed information; and
a display unit to combine the information stored in the augmented reality database with a display image, and to output the combined image in augmented reality.

2. The mobile terminal of claim 1, wherein the extraction unit recognizes the item of interest by a user selection or by automated recognition; or/and
wherein the extraction unit extracts the detailed information including image information of the item of interest from the metadata corresponding to the recognized item of interest;
or/and
wherein the extraction unit extracts image information of the item of interest from the content information of the recognized item of interest.

3. The mobile terminal of claim 1 or 2, wherein the display unit recognizes the item of interest stored in the augmented reality database in a first image captured using a camera, and combines the detailed information related to the recognized item of interest with the first image to output a combined second image in augmented reality;
wherein the display unit preferably recognizes the item of interest based on whether a portion of the display image captured using the camera is recognized as an image of the item of interest stored in the augmented reality database.

4. The mobile terminal of one of claims 1 to 3, wherein the extraction unit comprises:
a determination unit to parse the content information and to determine if the metadata corresponding to the item of interest is available in augmented reality; and
a conversion unit to convert the detailed information into an augmented reality format displayable in augmented reality,
wherein the extraction unit extracts the detailed information determined to be available by the determination unit;
wherein the determination unit preferably determines that the metadata is available in augmented reality if an image and detailed information related to the item of interest are included in the metadata.

5. The mobile terminal of one of claims 1 to 4,
wherein the extraction unit comprises a conversion unit to convert the detailed information into an augmented reality format displayable in augmented reality,
wherein the augmented reality database stores information in the augmented reality format converted by the conversion unit.

6. The mobile terminal of one of claims 1 to 5, wherein the content information comprises a broadcast content, a media content of a web page, or a moving image content.

7. The mobile terminal of one of claims 1 to 6, wherein the extraction unit further comprises:
an analysis unit to classify the content information according to content information types and to parse content information, wherein the analysis unit comprises an information type analysis unit to check the format of the received content information and
to direct the content information to be processed according to its content information type;
wherein the analysis unit preferably comprises:
a broadcast content analysis unit to identify a service type, parse, and analyze the broadcast content information type metadata;
an internet content analysis unit to analyze a webpage and parse internet content information type metadata; and
a media content analysis unit to analysis unit to analyze and parse received media information type content metadata.

8. The mobile terminal of one of claims 1 to 7, wherein the augmented reality database further comprises:
a table to record an information value associated with an item of interest that is available in augmented reality,
wherein the table is an augmented reality information table comprising an image field with a title of the item of interest as a primary key, or the table is a category table comprising a category information field value with a category title as a primary key.

9. The mobile terminal of one of claims 1 to 8, further comprising a setting unit to edit the field value of the augmented reality database according to a user instruction or automated rules.

10. A method for providing augmented reality, comprising:
receiving content information;
recognizing an item of interest in the received content information;
extracting detailed information from metadata corresponding to the recognized item of interest, wherein the detailed information is a field value of an augmented reality database;
storing the detailed information in the augmented reality database; and
combining the information stored in the augmented reality database with a first image into a second image, and outputting the second image in augmented reality.

11. The method of claim 10, wherein recognizing an item of interest in the received content information comprises:
recognizing the item of interest selected by a user or selected automatically from the received content information.

12. The method of claim 10 or 11, wherein extracting the detailed information comprises:
extracting image information of the recognized item of interest from image data of content information corresponding to the recognized item of interest;
or/and
wherein extracting the detailed information comprises:
parsing the content information and determining if the metadata corresponding to the item of interest is available in augmented reality;
extracting the detailed information determined to be available; and
converting the detailed information into an augmented reality format displayable in augmented reality.

13. The method of one of claims 10 to 12, wherein outputting the combined second image in augmented reality comprises:
recognizing the item of interest stored in the augmented reality database in a first image captured using a camera; and
combining the detailed information related to the recognized item of interest, which is stored in the augmented reality database, with the first image into a second image, and outputting the second image in augmented reality.

14. The method of one of claims 10 to 13, wherein storing the detailed information comprises:
converting the detailed information into an augmented reality format displayable in augmented reality; and
storing the converted detailed information in the augmented reality database.

15. A mobile terminal of one of claims 1 to 9, comprising:
a reception unit to receive content information;
a determination unit to parse the content information and to determine if the metadata corresponding to the item of interest is available in augmented reality;
an extraction unit to recognize an item of interest from the received content information and to extract detailed information determined to be available by the determination unit from metadata corresponding to the recognized item of interest, wherein the detailed information includes a field value of an augmented reality database;
a conversion unit to convert the extracted detailed information in an augmented reality format displayable in augmented reality;
the augmented reality database to store the converted detailed information;
a setting unit to edit the field value of the augmented reality database according to a user instruction or automated rules; and
a display unit to combine the information stored in the augmented reality database with a display image into a combined image, and to output the combined image in augmented reality.
